# EUROPEAN PATENT APPLICATION

(11) **EP 1 069 537 A2**
(43) Date of publication of application: **17.01.2001**
(21) Application number: 00113592.0
(22) Date of filing: 27.06.2000
(51) Int. Cl.: G07F 9/02, G07F 17/26

(54) **Customer terminal apparatus, its system, and recording medium which records a program**

(30) Priority: 14.07.1999 JP 20067099; 14.07.1999 JP 20071199
(71) Applicant: Casio Computer Co., Ltd., Shibuya-ku, Tokyo (JP)
(72) Inventor: Mizuno, Kimiyasu, Casio Computer Co., Ltd., Hamura-shi, Tokyo 205-8555 (JP); Kasahara, Takeshi, Casio Computer Co., Ltd., Hamura-shi, Tokyo 205-8555 (JP)
(74) Representative: Grünecker, Kinkeldey, Stockmair & Schwanhäusser Anwaltssozietät

(57) **Abstract**

In a control device of an automatic vending machine (1), when one or a plurality of photo images, which is or are designated by the customer at a console (5) from those stored in a memory card loaded from a recording medium insert mechanism (10), is or are to be printed by a printer (18), a controller (7) detects customer group information of customers who use the automatic vending machine (1) most frequently, preferentially selects advertisement information that matches the detected customer group information, adds the selected advertisement information to the photo image, and outputs the composite image to the printer (18) via a printer control unit (17), thus printing out the image.

## Description

The present invention relates to a customer terminal apparatus such as an automatic vending machine, its system, and a recording medium which records that program.

Customer terminal apparatuses such as automatic vending machines and the like, which can issue various kinds of prints for pay, are known.

Such automatic vending machines include the one in which image data such as photo images of famous persons (movie stars, musicians, and the like), illustration images of popular animation characters, and the like are registered in advance, and which can print and sell image data that a customer desired.

On the other hand, it is also proposed that an advertisement information image is added on such prints to be printed, and an advertiser bears customer's print expenses.

However, it is difficult for the advertiser who bears some or whole customer's print expenses to determine if their advertisement matches the needs of customers who use the automatic vending machine.

Also, on the managing side of a plurality of automatic vending machines, since customer needs vary depending on, e.g., the locations of automatic vending machines upon setting the functions of these machines, such needs cannot often be appropriately satisfied.

Furthermore, the above-mentioned automatic vending machines include the one which can print a photo image sensed by a digital camera. The customer inserts a recording medium that records the sensed photo image, and designates a photo image to be printed by operating the machine by himself or herself.

Since source images have different tendencies depending on the areas or customer groups who use the machines, source images are set in correspondence with the areas or customer groups of the machines.

However, such tendencies of source images are not permanent but change depending on the seasons or trend. For this reason, a service person must constantly go to the site of the automatic vending machine and must update its setup contents. As a result, maintenance processes are cumbersome and maintenance cost increases, resulting in high prices of prints.

It is an object of the present invention to allow an advertiser to reliably determine if their advertisement matches the needs of customers who use an automatic vending machine.

It is another object of the present invention to allow an advertiser if each automatic vending machine satisfies customer needs, even when the customer needs differ depending on, e.g., the locations of automatic vending machines.

It is still another object of the present invention to reduce maintenance cost by allowing very easy maintenance of an automatic vending machine and the like.

The present invention provides a customer terminal control system including a plurality of customer terminal apparatuses each operated by a customer, and a terminal management apparatus which is connected to the plurality of customer terminal apparatuses via communications, wherein the terminal management apparatus which is connected to each of the plurality of terminal apparatuses via a communication to receive and acquire customer group information of customers who use the terminal apparatus, detects a group of customers who use the terminal apparatus most frequency from the acquired customer group information, selects setup information suitable for the detected customer group, and sends the selected setup information to the terminal apparatus, and each of the plurality of terminal apparatuses updates an internal setup thereof in accordance with the setup information received from the terminal management apparatus.

Also, the present invention provides a customer terminal control system including a plurality of customer terminal apparatuses each operated by a customer, and a terminal management apparatus which is connected to the plurality of customer terminal apparatuses via communications, wherein the terminal management apparatus selects setup information corresponding to a characteristic of the terminal apparatus, to which the terminal management apparatus is connected via a communication, from a plurality of kinds of stored setup information, and sends the selected setup information to the terminal apparatus, and each of the plurality of terminal apparatuses updates an internal setup thereof in accordance with the setup information received from the terminal management apparatus.

According to the present invention, even when the needs of customers who use terminal apparatuses differ depending on, e.g., the locations of terminal apparatuses, whether or not the setups of each terminal apparatus match the needs of customers can be reliably checked. Since the service person need not go to the site of each terminal apparatus to check the needs of customers, thus greatly reducing personnel expenses.

Furthermore, since the terminal management apparatus calls each terminal apparatus to establish communications, and then transfers information, since the communication line need not be connected all the time, thus also reducing communication cost.

Moreover, according to the present invention, each terminal apparatus is very easy to maintain, thus greatly reducing maintenance cost.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a perspective view showing the outer appearance of an automatic vending machine which prints a photo image;
FIG. 2 is a block diagram showing the arrangement of a control device in the automatic vending machine;
FIG. 3 is a block diagram showing the arrangement of a printer;
FIGS. 4A and 4B are flow charts of a photo print process;
FIG. 5 shows the data format of a source image;
FIGS. 6A to 6C show an example of source images;
FIG. 7 shows the data format of an advertisement file;
FIG. 8 is a table which stores advertisement Nos. and advertisement contents in correspondence with each other;
FIG. 9 is a diagram showing the system arrangement;
FIG. 10 is a block diagram showing the internal arrangement of a terminal management apparatus;
FIG. 11 shows the data format of a master advertisement file;
FIGS. 12A and 12B are flow charts of an acquisition/setup process of the terminal management apparatus;
FIG. 13 is a total data table of customer group data, which are grouped in units of terminal apparatuses;
FIG. 14 is a table of source images corresponding to the customer group data;
FIG. 15 is a table of programs corresponding to the customer group data;
FIG. 16 is a flow chart of a main process of the terminal apparatus;
FIG. 17 is a flow chart of a reception process;
FIG. 18 shows a default menu program of the terminal apparatus;
FIG. 19 shows the data format of an advertisement file of the terminal apparatus;
FIG. 20 is a genre-dependent setup management table stored in the terminal management apparatus;
FIGS. 21A and 21B show the contents of terminal apparatus management tables stored in the terminal management apparatus;
FIG. 22 shows program information stored in the terminal management apparatus;
FIG. 23 shows the data format of a source image stored in the terminal management apparatus;
FIG. 24 is a flow chart of a terminal setup process in the terminal management apparatus;
FIG. 25 is a flow chart of a main process of each customer terminal apparatus;
FIG. 26 is a flow chart of a reception process; and
FIG. 27 is a flow chart of a photo image print process.

### (First Embodiment)

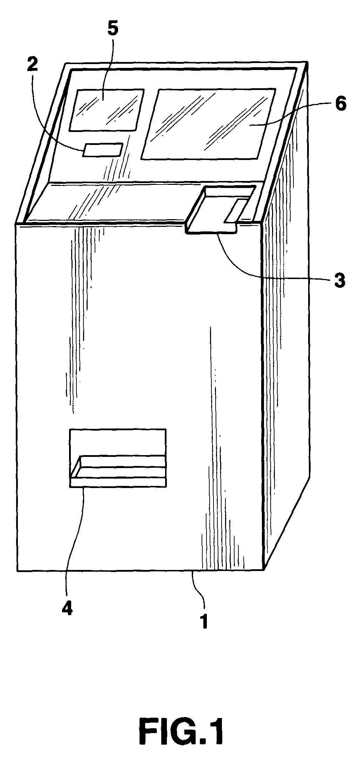

The first embodiment of the present invention will be described below with reference to FIGS. 1 to 8.

FIG. 1 shows the outer appearance of an automatic vending machine 1 according to the first embodiment. The automatic vending machine 1 prints and sells a photo image based on data provided by the customer. For this purpose, the automatic vending machine 1 has a recording medium insert port 2 for receiving a recording medium of photo image data (to be simply referred to as a "photo image" hereinafter) sensed by a digital camera on its upper portion.

This embodiment uses as a recording medium a memory card called a CF (compact flash) card capable of storing photo images of several to several 10 Mbytes. As other recording media, a PC card, smartmedia card, MO (magnetooptical disk), FD (floppy disk), and the like may be used.

The automatic vending machine 1 also has a fee insert/return port 3 in which the customer inserts paper money and coins for a print fee and from which he or she receives money inserted upon cancel or change at another position of its upper portion. Furthermore, the automatic vending machine 1 has a printed photo outlet port 4 from which a print of a photo image is discharged on its lower portion.

Moreover, the automatic vending machine 1 has a console 5 including various buttons that the customer operates, and a display unit 6 for displaying guidance messages, a fee, and the like on its upper portion.

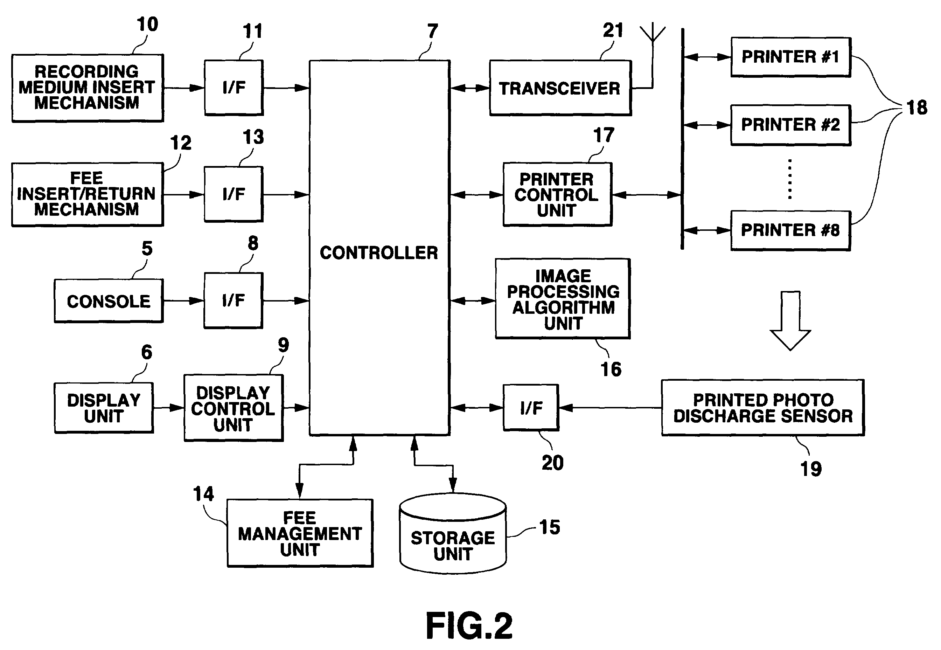

FIG. 2 is a block diagram showing the arrangement of a control device in the automatic vending machine 1. A controller 7 comprises a ROM that stores a program, a control module for controlling the entire automatic vending machine 1 in accordance with the program, and various registers required for control.

An interface (I/F) 8 detects ON/OFF states of the individual buttons on the console 5 in response to a scan signal from the controller 7, and inputs the detected states to the controller 7. A display control unit 9 renders image data supplied from the controller 7 to one frame, and outputs it to the display unit 6, thus displaying the rendered data.

A recording medium insert mechanism 10 is constructed by a mechanism for loading and unloading a memory card, its driving unit, and an image reader for reading a photo image recorded on the loaded memory card.

An interface 11 controls the recording medium insert mechanism 10 in accordance with a control command from the controller 7, and inputs a photo image read by the recording medium insert mechanism 10 to the controller 7. A fee insert/return mechanism 12 detects, sorts, and inspects inserted paper money and coins, and discharges paper money and coins to be returned. An interface 13 inputs a detection signal, a sort signal, and an inspection signal from the fee insert/return mechanism 12 to the controller 7.

A fee management unit 14 stores a plurality of kinds of fee system data as a table. The controller 7 looks up the table to select a corresponding fee system on the basis of data input from the console 5. A storage unit 15 stores image data of a plurality of kinds of advertisement information (to be simply referred to as "images of advertisement information" hereinafter), and temporarily stores a photo image read from the memory card loaded into the recording medium insert mechanism 10.

An image processing algorithm unit 16 executes an image processing algorithm for a photo image and an image of advertisement information.

Note that the image processing algorithm can be implemented by software by the storage unit 15 and the controller 7 that executes a program in place of a hardware image processing algorithm unit 16, when an arithmetic processor that constructs the control module of the controller 7 has high processing speed.

A printer control unit 17 controls eight printers 18 connected to the apparatus, and outputs a print command and print data from the controller 7 to the printers 18. A printed photo discharge sensor 19 checks if prints printed by the printers 18 are discharged to the printed photo outlet port 4. An interface 20 inputs the detection result of the printed photo exhaust sensor 19 to the controller 7.

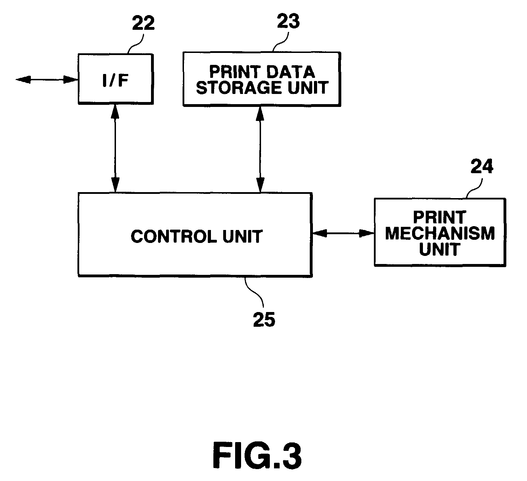

As shown in FIG. 3, each printer 18 comprises an interface 22 for exchanging commands such as a print command and the like, and print data with the printer control unit 17, a print data storage unit 23 for temporarily storing print data, a print mechanism unit 24 for actually printing an image, and a control unit 25.

The control unit 25 renders print data supplied from the printer control unit 17 via the interface 22 into a print format, stores it in the print data storage unit 23, reads out the stored data, and supplies the readout data to the print mechanism unit 24.

A transceiver 21 shown in FIG. 2 is a communication means which makes the automatic vending machine 1 serve as a communication terminal apparatus. The transceiver 21 comprises a versatile PHS or portable phone, and establishes a connection to a public telephone network using a telephone number as unique identification information.

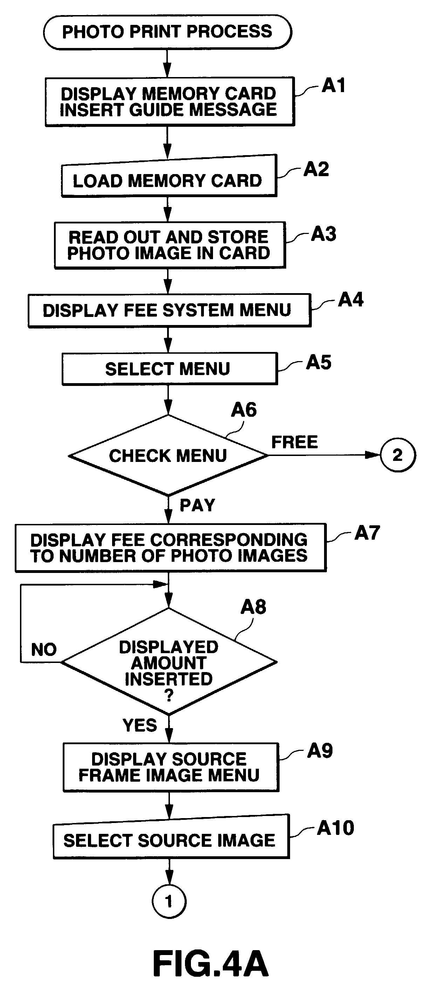

A photo print process of the control device of the automatic vending machine 1 according to the first embodiment will be described below with reference to FIGS. 4A to 8.

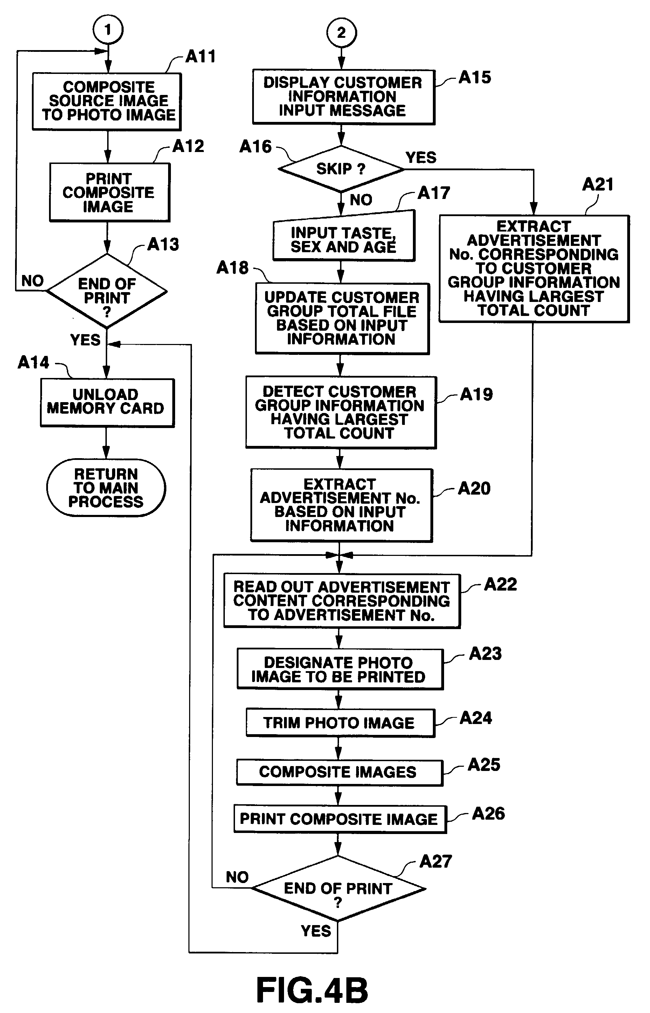

FIGS. 4A and 4B are flow charts of the photo print process executed when a photo image print menu is selected at the console 5 in a main process (not shown).

In the flow shown in FIG. 4A, the controller 7 displays a guide message for prompting the customer to insert a memory card on the display unit 6 (step A1). The control waits for insertion of a memory card via the interface 11. If the customer inserts a memory card (step A2), the controller 7 reads out an image file in that memory card, i.e., a photo image sensed by a digital camera, and stores it in the storage unit 15 (step A3).

In this case, since photo images have different formats depending on camera manufacturers, the customer may input the manufacturer name. In this embodiment, the controller 7 automatically detects the format based on, e.g., an index or the like of the memory card, executes an image process that matches the detected format, and stores the processed image in the storage unit 15.

The controller 7 displays thumbnails as reduced-scale images of all frames of stored photo images, and makes the customer select a frame or frames to be printed. Then, the controller 7 displays a fee system menu (step A4).

Menu 1 is displayed in case of pay print that the customer pays a predetermined print fee, and menu 2 is displayed in case of free print that an advertiser bears the print fee. If the customer selects one of these menus (step A5), the controller 7 checks the selected menu (step A6).

If pay print menu 1 is selected, the controller 7 displays a fee for the number of photo images to be printed (step A7), and checks if the displayed amount is inserted from the fee insert/return port 3 (step A8). If Y (YES) in step A8, the controller 7 displays a menu of frame source images with the selected photo image or images (step A9).

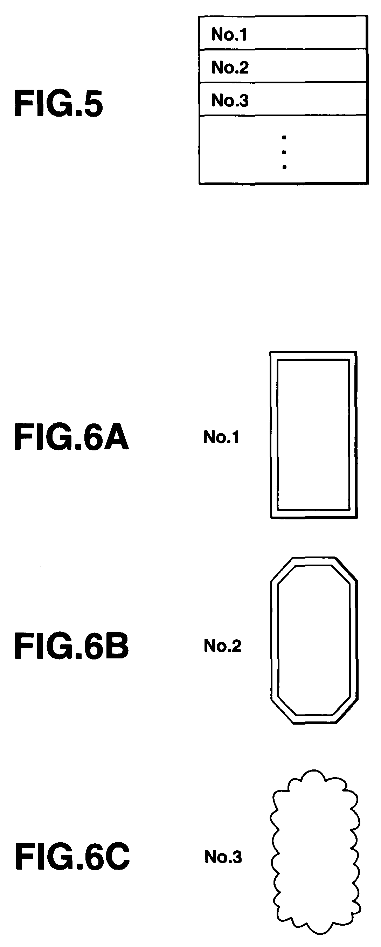

FIG. 5 shows the data format of a source image, and FIGS. 6A to 6C show examples of source images. As shown in FIG. 5, a plurality of frame images are classified by serial numbers, and frame images shown in FIGS. 6A to 6C can be selected and composited by selecting a desired number.

Referring back to FIG. 4A, if a source image is selected (step A10), the controller 7 composites the selected image with the photo image (step A11) in the flow shown in FIG. 4B, and prints the composite image (step A12). The controller 7 then checks if all selected photo images have been printed (step A13).

If photo images to be printed still remain, the flow returns to step A11 to composite images, and the controller 7 repeats the print process of that composite image in step A12. If all the selected photo images have been printed, the controller 7 unloads the memory card (step A14), and returns to the main process.

If free print menu 2 is selected in step A6, the controller 7 displays a message that prompts to input customer information (step A15) in the flow shown in FIG. 4B. In this case, a skip select menu with which the customer can decline input of customer information is displayed at the same time.

The controller 7 then checks if the skip menu is selected (step A16). If the customer inputs customer information, i.e., his or her taste, gender, and age in place of the skip menu (step A17), the controller 7 updates a customer total file by the input information (step A18).

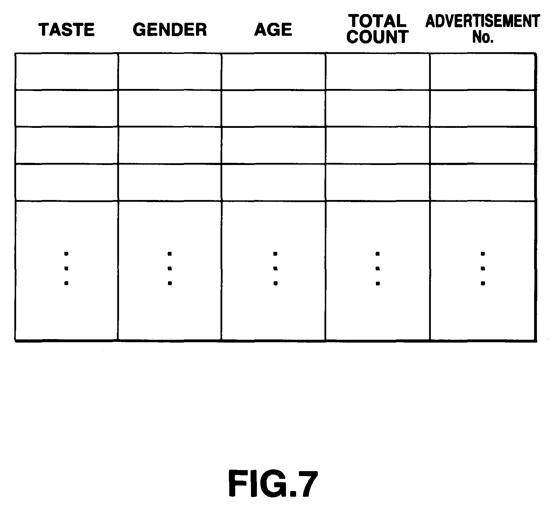

More specifically, in a table that stores customer information and total counts in correspondence with each other, as shown in FIG. 7, a total count corresponding to the input customer information, i.e., the input taste, gender, and age is updated (incremented). Then, the controller 7 detects customer group information corresponding to the largest total count (step A19).

Also, the controller 7 extracts a corresponding advertisement number based on the input information, and sets it in an extracted advertisement number register (step A20).

On the other hand, if the skip menu is selected in step A16, the controller 7 preferentially extracts customer group information, which has been detected in step A19 previously and corresponds to the currently largest total count, i.e., an advertisement number corresponding to a group of customers who use the automatic vending machine 1 most frequently (step A21).

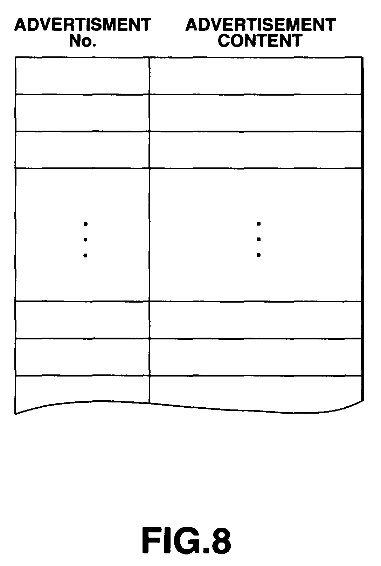

The controller 7 extracts an advertisement content (image of advertisement information) corresponding to the advertisement number extracted in step A20 or A21 from a table shown in FIG. 8 (step A22). Then, the customer designates a photo image or images to be printed (step A23). The controller 7 trims one photo image (step A24).

That is, image data of the photo image portion corresponding to an area where the image of advertisement information is printed is deleted. The image processing algorithm unit 16 then composites the two images (step A25), and outputs the composite image to the designated printer 18 via the printer control unit 17, thus printing the image (step A26).

The controller 7 then checks if all photo images designated by the customer have been printed (step A27). If photo images to be printed still remain, the flow returns to step A22 to repeat processes up to step A26. If all the designated photo images have been printed, the memory card is unloaded (step A14), and this flow ends.

Note that the image of advertisement information is not always added to a product and printed like a photo image. Therefore, the image of advertisement information may be merely displayed in place of being printed. When the image of advertisement information is displayed, a high advertising effect can be obtained.

In this manner, in the first embodiment, customer group information of customers who frequently use the automatic vending machine 1 is detected, and advertisement information that matches the detected customer group information is preferentially selected and output.

Therefore, the advertiser can reliably determine if their advertisement matches the needs of customers who use the automatic vending machine.

### (Second Embodiment)

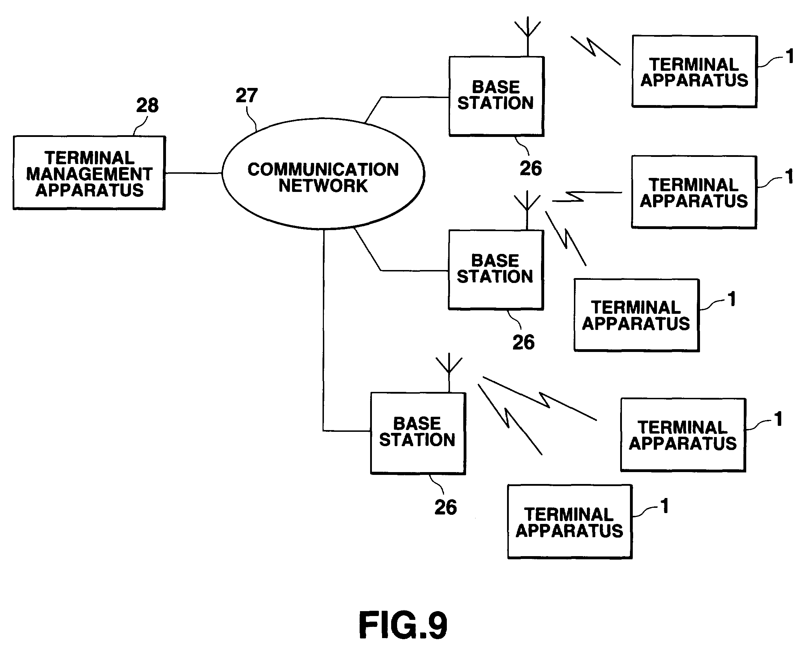

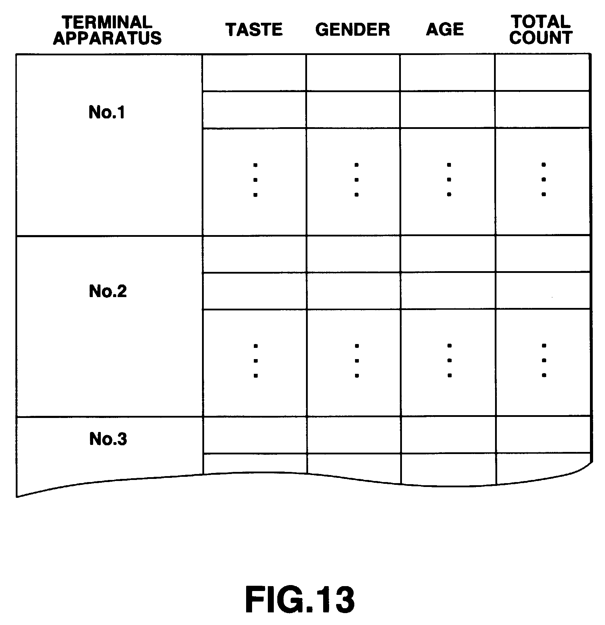

The second embodiment of the present invention will be described below with reference to FIGS. 9 to 19.

FIG. 9 shows the arrangement of a system built by connecting a plurality of terminal apparatuses 1 to a public communication network. Each terminal apparatus 1 has the same arrangement as that of the automatic vending machine 1 which has been explained in the first embodiment, and serves as a terminal apparatus connected to the communication network.

More specifically, each terminal apparatus 1 is connected to a nearest base station 26 by radio via the transceiver 21 shown in FIG. 2. A plurality of base stations 26 are connected to a public communication network 27 via lines. A terminal management apparatus 28 that manages the terminal apparatuses 1 is connected to the public communication network 27.

More specifically, the arrangement shown in FIG. 9 is an automatic vending control system that connects the plurality of terminal apparatuses 1 and the terminal management apparatus 28 via communications, and controls automatic vending at the individual terminal apparatuses 1.

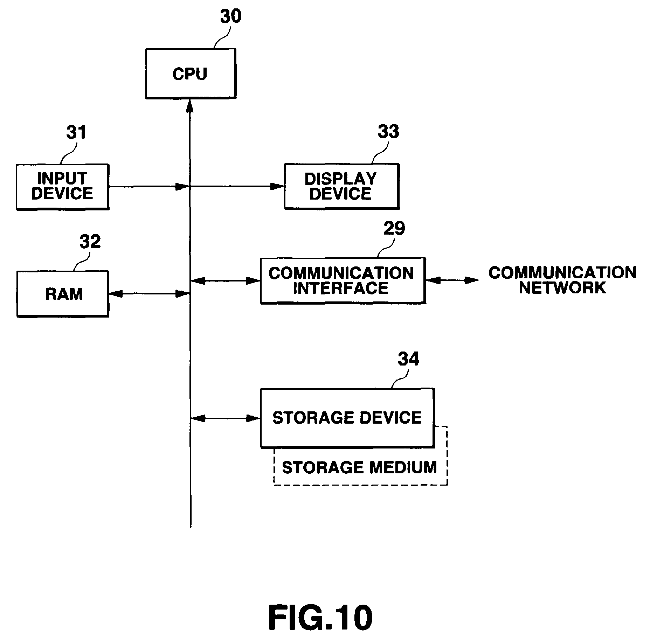

FIG. 10 is a block diagram showing the internal arrangement of the terminal management apparatus 28. A communication interface 29 connects the public communication network 27 and terminal management apparatus 28 shown in FIG. 9.

A CPU 30 calls the individual terminal apparatuses 1 via a communication interface 29 connected thereto via the internal bus. Also, the CPU 30 exchanges commands and data with an input device 31, RAM 32, display device 33, and storage device 34 connected thereto via the internal bus, and controls the entire terminal management apparatus 28.

The input device 31 inputs registration information in accordance with a registration request from an advertiser, and also an image of advertisement information provided by the advertiser. The input registration information and image of advertisement information are stored as data of a master file in the storage device 34.

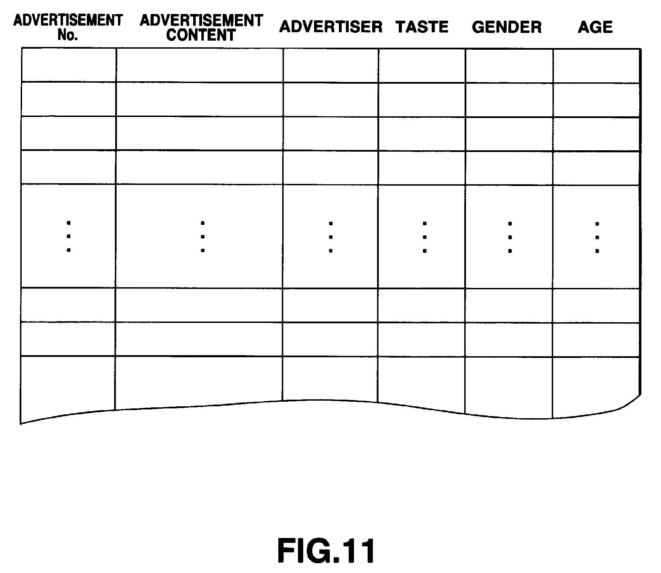

In this case, the advertiser designates the terminal apparatus to be advertised, and registers information. The master file has the data format that can specify an advertisement number, advertisement content (image of advertisement image), and advertiser by a taste, gender, and age as customer group information, as shown in FIG. 11.

The operation of the automatic vending control system in the second embodiment will be described below with reference to the flow chart of the terminal management apparatus 28, the flow chart of the terminal apparatus 1, and other drawings.

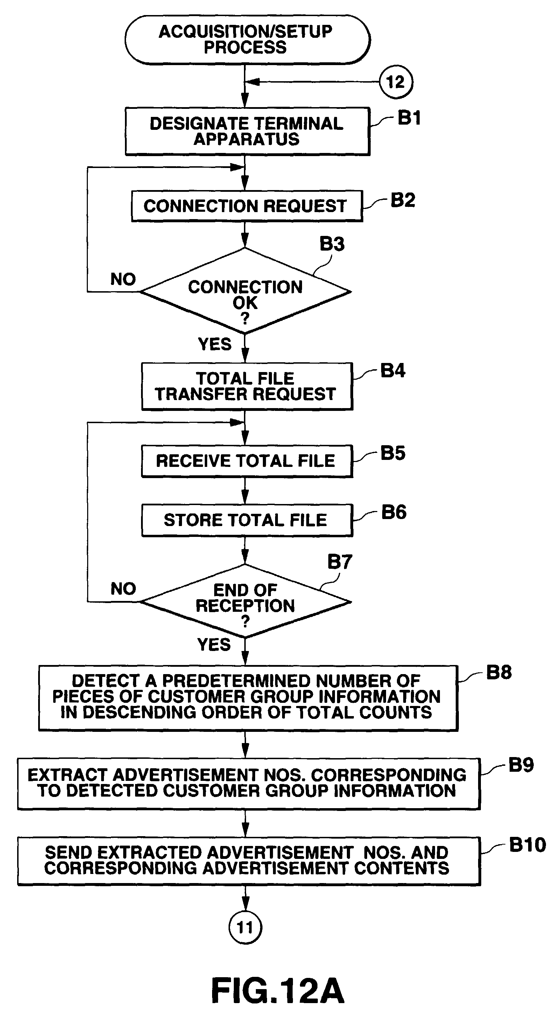

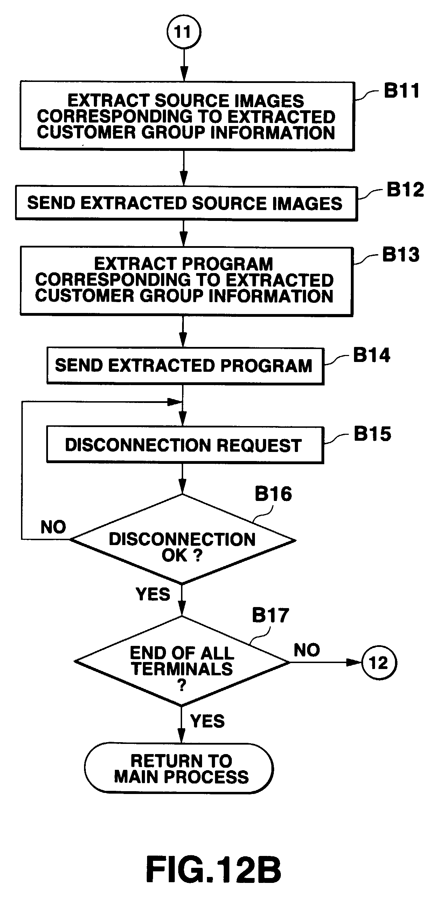

FIGS. 12A and 12B are flow charts showing an acquisition/setup process of the terminal management apparatus 28. In this flow, an acquisition process of data of the total file shown in FIG. 7 of the first embodiment is executed. The CPU 30 designates the terminal apparatus that acquires data (step B1), and calls (dials) that terminal apparatus to request connection (step B2).

The CPU 30 waits for a reply indicating connection OK (step B3). Upon receiving the reply indicating connection OK, the CPU 30 requests that terminal apparatus to transfer its total file (step B4). Upon receiving the total file from the terminal apparatus (step B5), the CPU 30 stores the received total file in the storage device 34 (step B6).

The CPU 30 checks if reception of the total file from the designated terminal apparatus is complete (step B7). If reception is not complete, the flow returns to step B5 to proceed with the reception.

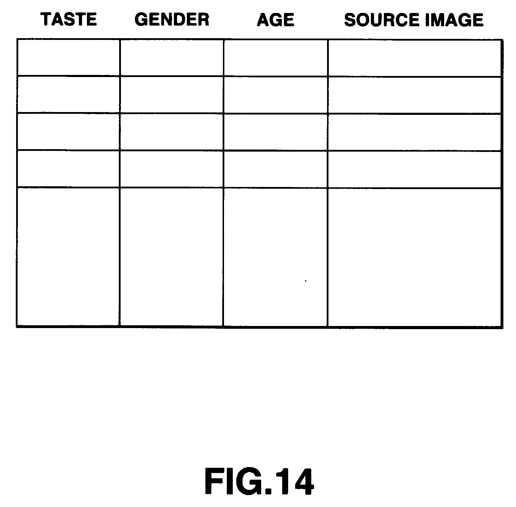

Upon completion of reception of the total file from the designated terminal apparatus, the CPU 30 stores the received file in those grouped in units of terminal apparatuses, as shown in FIG. 14, and detects a predetermined number (10 at maximum) of pieces of customer group information in descending order of total counts (step B8). The CPU 30 extracts advertisement numbers corresponding to the respective detected customer group information from the master file shown in FIG. 11 (step B9).

The CPU 30 sends the extracted advertisement numbers, and corresponding advertisement contents to the terminal apparatus (step B10). In the flow shown in FIG. 12B, the CPU 30 extracts source images corresponding to the extracted customer information from a master source image file shown in FIG. 14 (step B11). The CPU 30 sends the source images to the terminal apparatus (step B12).

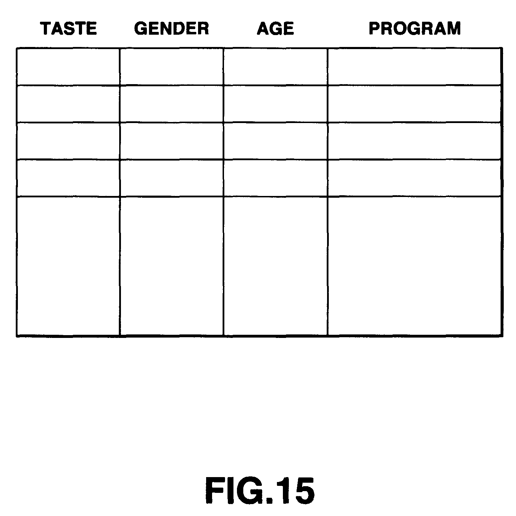

The CPU 30 extracts program information corresponding to the extracted customer information from a master program file shown in FIG. 15 (step B13). The CPU 30 sends that program information to the terminal apparatus (step B14).

The CPU 30 requests the terminal apparatus to disconnect (step B15), and waits for a reply indicating disconnection OK from the terminal apparatus (step B16). Upon receiving the reply indicating disconnection OK, the CPU 30 executes a disconnection process.

The CPU 30 then checks if transfer of total files from all the terminal apparatuses is complete (step B17). If terminal apparatuses from which total files are not transferred still remain, the flow returns to step B1 in FIG. 12A, and the CPU 30 repeats the processes up to step B16 in FIG. 12B for that terminal apparatus. If it is determined in step B17 in FIG. 12B that transfer of total files from all the terminal apparatuses is complete, the control returns to the main process.

On the other hand, each terminal apparatus 1 that has transferred the total file executes a process corresponding to data received from the terminal management apparatus 28 on the basis of the received data.

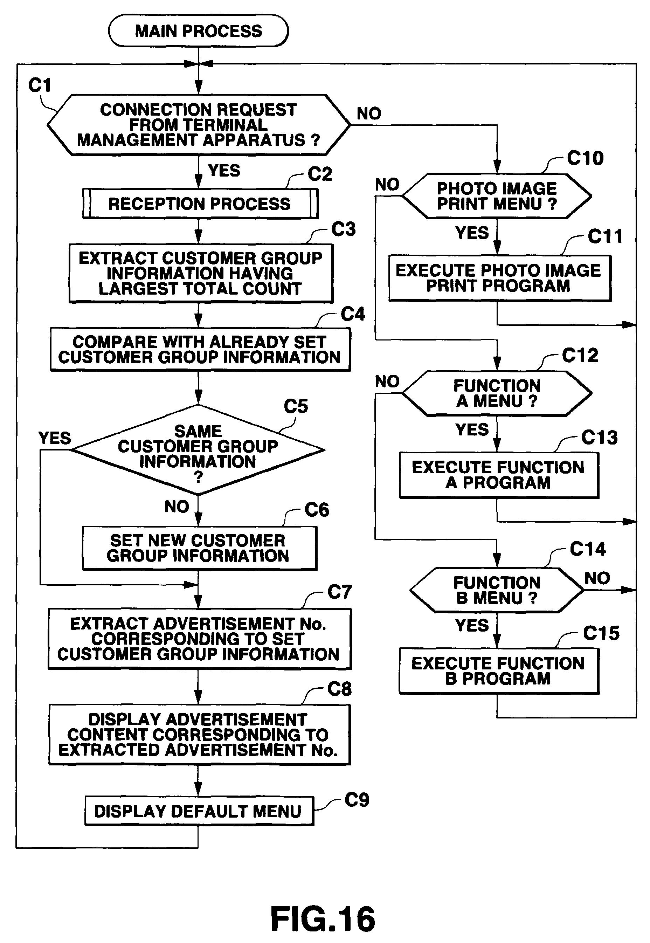

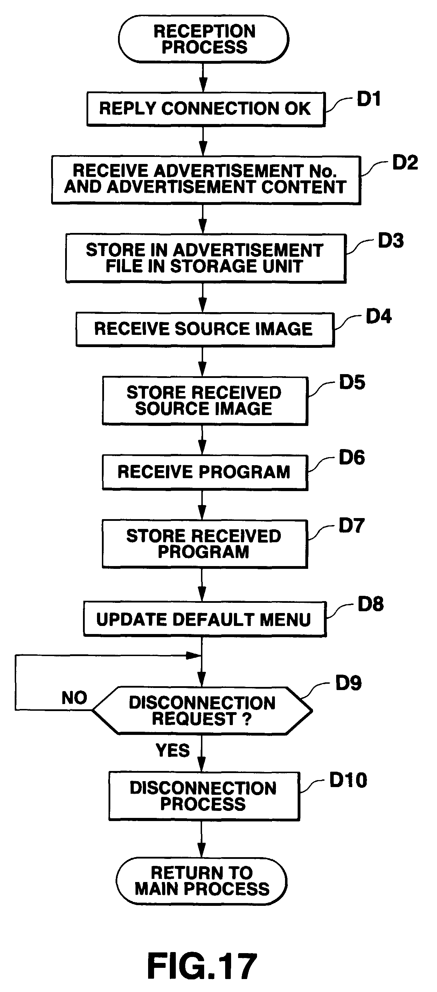

FIGS. 16 and 17 are flow charts showing the main process of each terminal apparatus 1. In the flow chart shown in FIG. 16, the controller 7 checks if a connection request is received from the terminal management apparatus 28 (step C1). If Y in step C1, the controller 7 executes a reception process (step C2).

FIG. 17 shows the flow of the reception process. In response to the connection request from the terminal management apparatus 28, the controller 7 sends a reply indicating connection OK (step D1). The controller 7 receives the advertisement numbers and contents (images of advertisement information) from the terminal management apparatus 28 (step D2).

The controller 7 stores the received advertisement numbers and contents in an advertisement file in the storage unit 15 (step D3). Also, the controller 7 receives source images (step D4), and stores the received source images in the storage unit 15 (step D5).

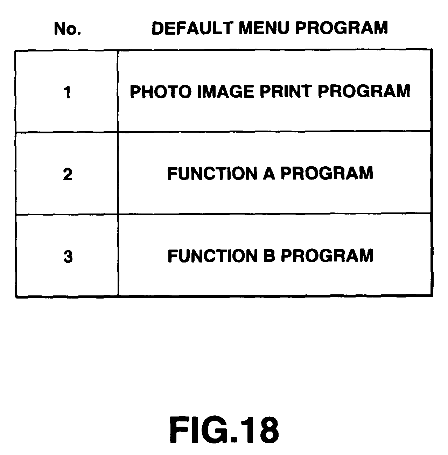

Furthermore, the controller 7 receives program information (step D6), and stores the received program information in the storage unit 15 (step D7). The controller 7 then updates a default menu shown in FIG. 18 by the stored program information (step D8).

The controller 7 then checks if a disconnection request is received from the terminal management apparatus 28 (step D9). If Y in step D9, the controller 7 executes a disconnection process (step D10), and returns to the main process.

In the main process shown in FIG. 16, after the reception process in step C2, the controller 7 extracts customer group information corresponding to the largest total count with reference to the advertisement file stored in the storage unit 15 (step C3).

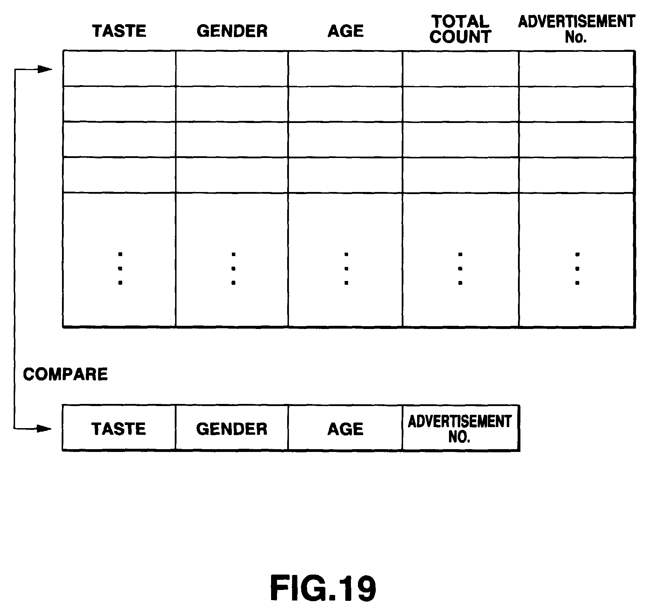

More specifically, the uppermost customer group information and corresponding advertisement number are extracted from those sorted in descending order of total counts in the advertisement file shown in FIG. 19. The controller 7 compares extracted customer group information with the already set customer group information (step C4).

The controller 7 then checks if the two pieces of customer group information are the same (step C5). If N (NO) in step C5, the controller 7 updates the already set customer group information by the uppermost one to set new customer group information corresponding to the largest total count (step C6).

When the customer group information has been updated, or when the two pieces of customer group information are the same and information is not updated, the controller 7 extracts advertisement number corresponding to the set customer group information (step C7). Then, the controller 7 displays an advertisement content corresponding to the extracted advertisement number (step C8). Also, the controller 7 displays the default menu (step C9).

After that, the flow returns to step C1 to check if a connection request is received from the terminal management apparatus 28. If N in step C1, the controller 7 checks if the default menu shown in FIG. 18 is selected.

More specifically, the controller 7 checks if a photo image print menu is selected (step C10). If that menu is selected, the controller 7 extracts a photo image print program (step C11).

In this case, the flow shown in FIGS. 4A and 4B of the first embodiment is executed. The controller 7 checks if the selected default menu item is function A (step C12). If this menu item is selected, the controller 7 executes a function program A (step C13); otherwise, the controller 7 checks if the selected default menu item is function B (step C14). If this menu item is selected, the controller 7 executes a function B program (step C15).

After the program corresponding to the selected menu item is executed, the flow returns to step C1 to check if a connection request is received from the terminal management apparatus 28. Functions A and B are not particularly limited. For example, functions A and B may include a function of outputting audio information such as a music and the like, a function of providing a game to the customer, and the like.

As described above, in the automatic vending control system of the second embodiment, the terminal management apparatus 28 receives and acquires customer group information using the individual terminal apparatuses 1 as the automatic vending machines to detect a group of customers who use the automatic vending machine most frequently. The apparatus 28 then selects setup information suitable for the detected customer group, and sends it to the corresponding terminal apparatus 1. Each terminal apparatus 1 updates its internal setup in accordance with the setup information received from the terminal management apparatus 28.

Therefore, even when the customer needs differ depending on, e.g., the locations of automatic vending machines, whether or not the setup of each terminal apparatus 1 matches the customer needs can be reliably determined. Also, since no service person need to go to the site of each terminal apparatus 1 to check the customer needs, personnel expenses can be greatly reduced. Furthermore, since the terminal management apparatus 28 calls each terminal apparatus 1 to establish communication, and then transfers information, the communication line need not be always connected, and the communication cost can also be reduced.

In the first embodiment, an image print process is executed by the program installed in advance in the automatic vending machine 1. In the second embodiment, the automatic vending control system operates in accordance with programs installed in advance in the plurality of terminal apparatuses 1 and terminal management apparatus 28. Alternatively, a program may be recorded on a versatile recording medium such as a floppy disk, CD, MD, or the like, and the invention of a medium may be implemented.

More specifically, in order to implement the invention in the first embodiment, a recording medium which records a control program used in an automatic vending machine operated by a customer records an image print process program that executes an information acquisition sequence for acquiring customer group information of customers who use that automatic vending machine, a detection sequence for detecting a group of customers who use the automatic vending machine most frequently from the acquired customer group information, a selection sequence for selecting advertisement information that matches the detected customer group from a plurality of kinds of advertisement information, and an output sequence for preferentially outputting the selected advertisement information.

In order to implement the invention of the second embodiment, a first program used in the terminal management apparatus 28, and a second program used in each terminal apparatus 1 are recorded on a versatile recording medium.

The first program includes an information acquisition sequence for connecting each terminal apparatus via a communication, and receiving and acquiring customer group information of customers who used the terminal apparatus, a detection sequence for detecting a group of customers who use the terminal apparatus most frequently from the acquired customer group information, and a sending sequence for selecting setup information that matches the detected customer group, and sending it to the terminal apparatus, and
the second program includes a setup updating sequence for updating the setup of that terminal apparatus in accordance with the setup information received from the terminal management apparatus.

In the first and second embodiments, setup information such as a source image, advertisement content (image of advertisement information), program information, or the like, which matches a group of customers who use the vending machine most frequently, is selected. However, the setup information to be selected is not limited to such specific information. For example, music information, movie (video) information, information pertaining to a game, or the like, which matches a group of customers who use the vending machine most frequently, may be selected as the setup information.

### (Third Embodiment)

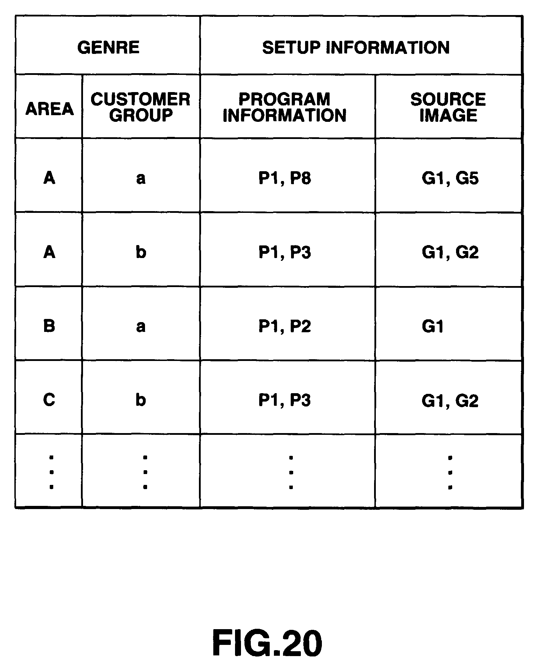

The third embodiment will be explained below with reference to FIGS. 20 to 27.

Since the third embodiment commonly uses FIGS. 1, 2, and 3 in the first embodiment, and FIGS. 9 and 10 in the second embodiment, a detailed description thereof will be omitted. In the third embodiment, the input device 31 shown in FIG. 10 inputs program information for determining the functions of the terminal apparatus 1, and source images to be composited with a photo image, which is printed by the terminal apparatus 1.

The source images include images of advertisement information provided by an advertiser, frame images, and the like. The input setup information is stored in a genre-dependent setup management table in the storage device 34.

FIG. 20 shows an example of the genre-dependent setup management table stored in the storage device 34. A plurality of pieces of setup information are categorized in units of genres including areas (A, B, C, ...) and customer groups (a, b, c, ...). As the program information in the setup information, a plurality of kinds of programs (P1, P2, ..., P8) are available. Also, as the source images, a plurality of kinds of images (G1, G2, ..., G5) are available.

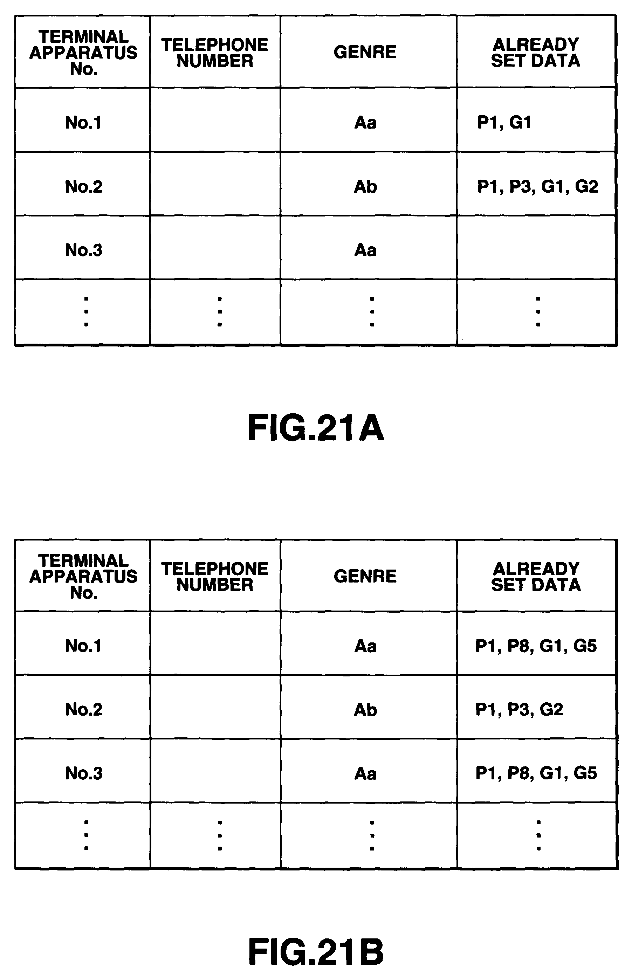

The storage device 34 stores telephone number data, genre data as a combination of area and customer group data, and already set data including program information and source images in units of terminal apparatuses 1 in a terminal apparatus management table shown in FIG. 21A. In other words, the storage device 34 stores the characteristics of the individual terminal apparatuses.

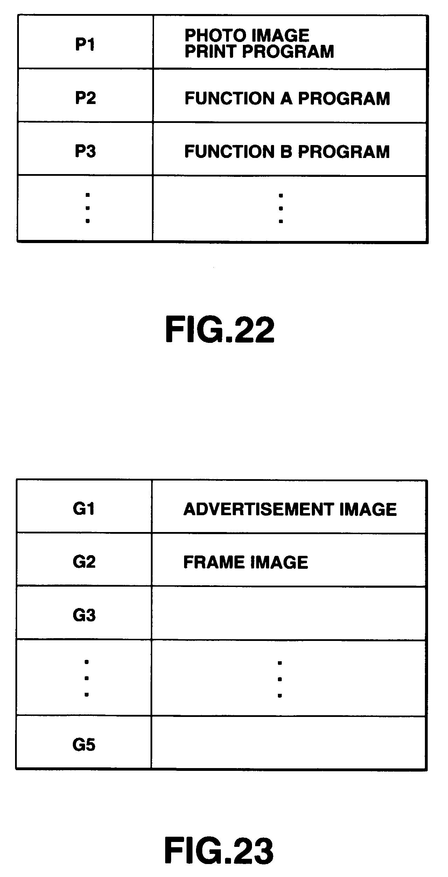

FIG. 22 shows a plurality of kinds of program information stored in the storage device 34. Program information P1 is a photo image print program, which is set in all the terminal apparatuses 1. FIG. 23 shows a plurality of kinds of source images stored in the storage device 34. Image G1 is an image of advertisement information, and image G2 is a frame image.

The operation of the third embodiment will be explained below.

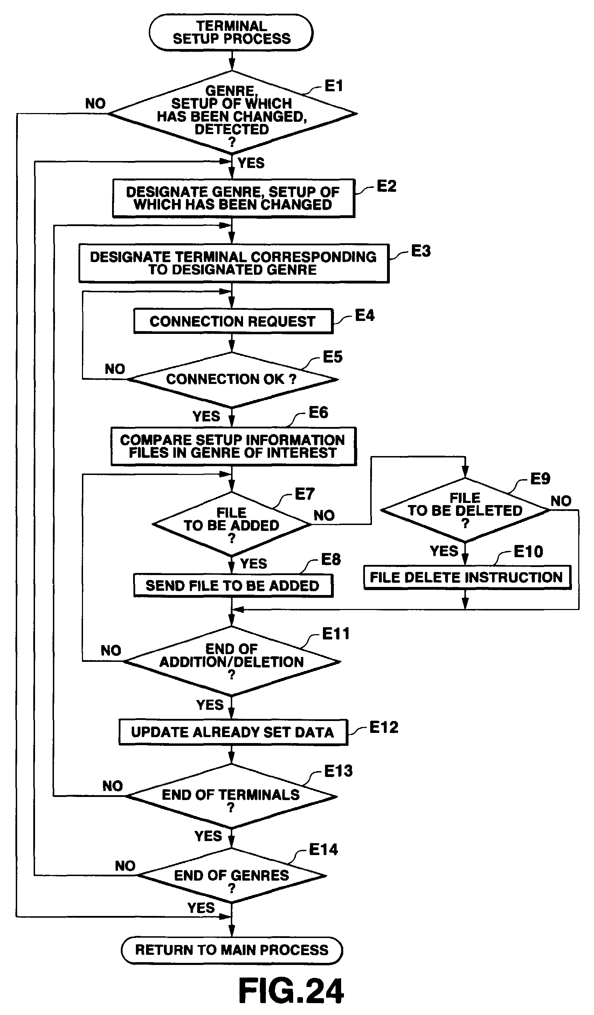

FIG. 24 shows the flow of a terminal setup process in the terminal management apparatus 28. When a terminal setup mode is selected in a main process (not shown), this flow starts. The CPU 30 checks if a genre, a setup of which has been changed, is detected (step E1). If no genres, setups of which have been changed, are detected, the control immediately returns to the main process. If a genre, a setup of which has been changed, is detected, the CPU 30 designates that genre (step E2).

The CPU 30 designates a terminal apparatus corresponding to the designated genre (step E3). The CPU 30 sends a connection request to the designated terminal apparatus (step E4). The control then waits for a reply indicating connection OK from that terminal apparatus (step E5).

Upon receiving the reply indicating connection OK, the CPU 30 compares setup information files (data) in the genre to be changed to detect a different file (step E6). The CPU 30 then checks if a file is to be added (step E7). If Y in step E7, the CPU 30 sends that file to be added (step E8).

The CPU 30 also checks if a file is to be deleted (step E9). If Y in step E9, the CPU 30 issues a file delete instruction (step E10). The CPU 30 then checks if file addition/deletion is complete (step E11). If files to be added or deleted still remain, the process loop in steps E7 to E10 repeats itself.

If file addition/deletion is complete, the CPU 30 updates the already set data corresponding to the designated terminal apparatus (step E12). That is, data in the terminal apparatus management table in the storage device 34 are updated.

The CPU 30 checks if an update process for all the terminal apparatuses to be updated in the designated genre is complete (step E13). If terminal apparatuses to be updated still remain, the flow returns to step E3 to repeat processes up to step E12.

If the update process for all the terminal apparatuses to be updated is complete, the CPU 30 checks if genres to be changed have been changed (step E14). If genres to be changed still remain, the flow returns to step E2 to repeat processes up to step E13; otherwise, the control returns to the main routine.

For example, when program information P8 and image G5 are added in genre Aa consisting of area A and customer group a, image G1 is deleted in genre Ab, and a new terminal apparatus with terminal number 3 for genre Aa is equipped, the data in the terminal apparatus management table shown in FIG. 21A are changed to those shown in FIG. 21B.

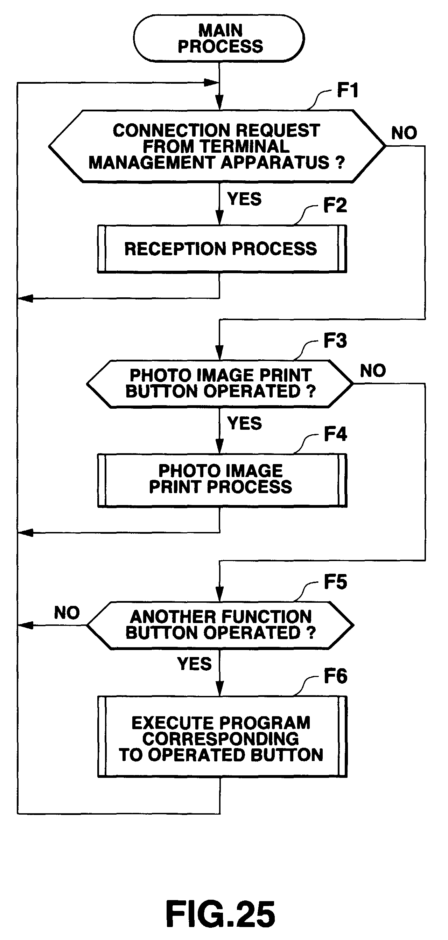

FIG. 25 shows the flow of a main process of each terminal apparatus. The controller 7 shown in FIG. 2 monitors the transceiver 21 to check if a connection request is received from the terminal management apparatus (step F1). If Y in step F1, the controller 7 executes a reception process (step F2).

Also, the controller 7 scans the console 5 to check if a photo image print button has been pressed (step F3). If Y in step F3, the controller 7 executes a photo image print process (step F4). If one of other function buttons has been pressed (step F5), the controller 7 executes a program corresponding to the pressed button (step F6).

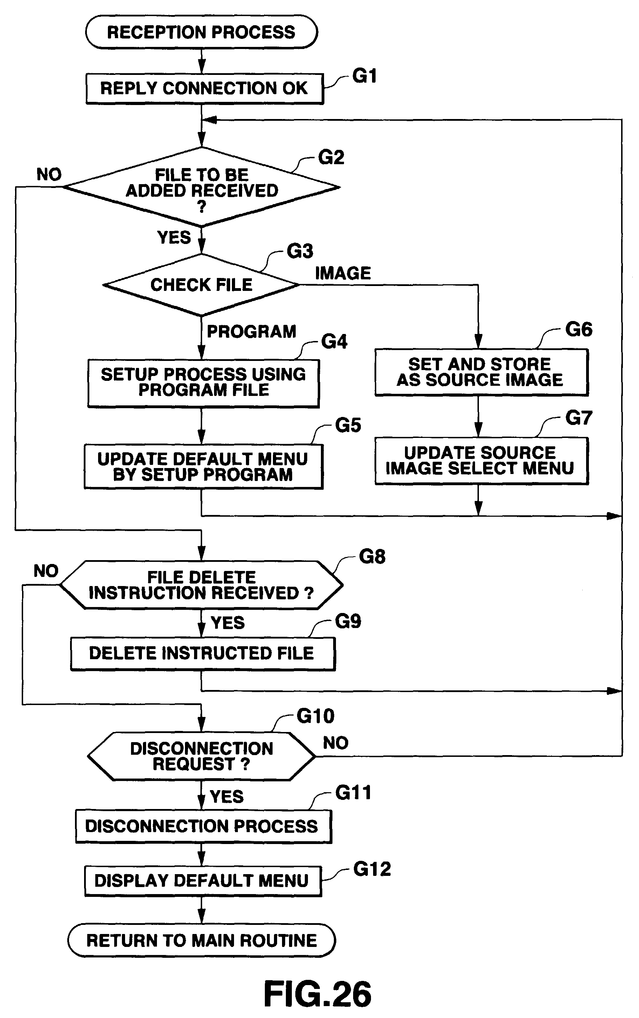

FIG. 26 shows the flow of the reception process in step F2 in the main process shown in FIG. 25. The controller 7 sends a reply indicating connection OK to the terminal management apparatus which issued the connection request (step G1).

The controller 7 waits for reception of an additional file from the connected terminal management apparatus (step G2). Upon receiving the additional file, the controller 7 checks if that file is program information or image information (step G3). If the received information is program information, the controller 7 executes a setup process based on the additional file of the program information (step G4).

The controller 7 updates a default menu by a setup program (step G5). On the other hand, if the received additional file is image information, the controller 7 sets that image information as a source image, and stores it in the storage unit (step G6). The controller 7 then updates a source image select menu (step G7). After the default menu is updated in step G5 or after the select menu is updated in step G7, the flow returns to step G2.

If no additional file is received in step G2, the controller 7 checks if a file delete instruction is received (step G8). If Y in step G8, the controller 7 deletes the instructed file (step G9).

After the file is deleted, the flow returns to step G2. If no additional file is received in step G2 and no file delete instruction is received in step G8, the controller 7 checks if a disconnection request from the terminal management apparatus is received (step G10). If N in step G10, the flow returns to step G2; otherwise, the controller 7 executes a disconnection request process (step G11).

The controller 7 displays the default menu that has been updated in step G5 or the old one which remains the same (step G12). The control then returns to the main process.

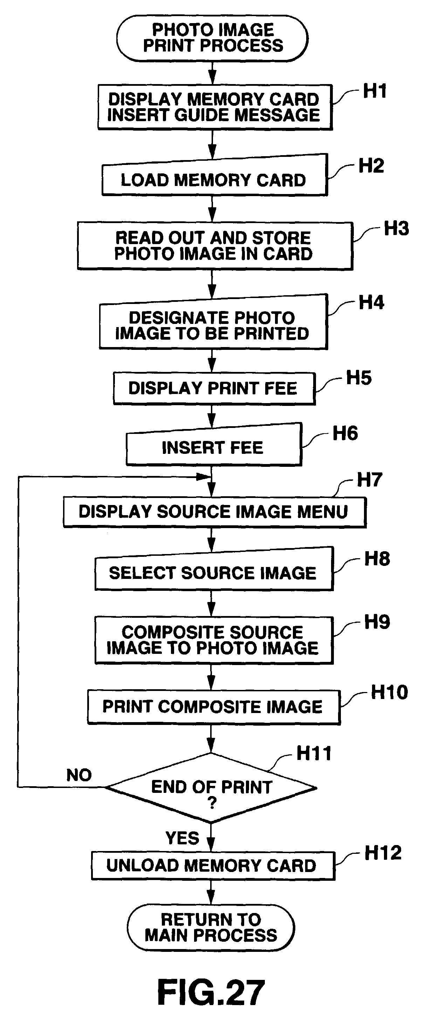

FIG. 27 shows the flow of the photo image print process in step F4 in the main process in FIG. 25. The controller 7 displays a guide message for prompting the customer to insert a memory card on the display unit 6 shown in FIGS. 1 and 2 (step H1). If the customer inserts a memory card (step H2), the controller 7 reads out and stores photo images in that memory card (step H3).

The controller 7 displays thumbnails of the stored images, and waits for a print designation input from the customer. If photo images to be printed are designated (step H4), the controller 7 displays a print fee for the designated number of images (step H5). If the customer inserts the fee (step H6), the controller 7 displays a source image select menu (step H7). For example, a plurality of kinds of frame images are displayed.

If the customer selects a source image (step H8), the controller 7 composites the selected source image with the photo image (step H9). When the frame image is composited, the controller 7 trims the peripheral portion of the photo image, and pastes the selected frame image on that trimmed portion. Then, the controller 7 prints the composite image (step H10). The controller 7 checks if all photo images designated by the customer have been printed (step H11).

If photo images to be printed still remain, the flow returns to step H7 to repeat processes up to step H10. On the other hand, if all the photo images have been printed, the controller 7 unloads the memory card (step H12), and the control returns to the main process.

As described above, in the third embodiment, the terminal management apparatus 28 selects and sends setup information corresponding to a given genre as the characteristics of the terminal apparatus 1, to which the apparatus 28 is connected via a communication, from a plurality of kinds of setup information stored in the storage device 34. The terminal apparatus 1 updates its own setup contents in accordance with the received setup information.

Therefore, each terminal apparatus can be maintained very easily, and the maintenance cost can be greatly reduced.

The setup information to be sent includes program setup information that determines the functions of the terminal apparatus 1. In this case, each terminal apparatus 1 updates the setup contents of one of a plurality of functions corresponding to the received program setup information.

Also, the setup information to be sent includes addition information for adding another content to those already set in the terminal apparatus 1 or deletion information for deleting a given content already set in the terminal apparatus.

The terminal management apparatus 28 selects and sends setup information corresponding to the characteristics of a use environment as a genre of the terminal apparatus, to which the apparatus 28 is connected via a communication, from a plurality of kinds of setup information stored in the storage device 34.

As another embodiment, the terminal management apparatus 28 may check setup information already set in each terminal apparatus 1, which corresponds to setup information to be changed, and may select and send only different data from the setup information already set in the apparatus 1 on the basis of the checking result.

## Claims

1. A customer terminal apparatus (1) operated by a customer, characterized by comprising:
information acquisition means (7, C2 in FIG. 16) for acquiring customer group information of customers who use said customer terminal apparatus;
detection means (7, C3 in FIG. 16) for detecting a group of customers who use said customer terminal apparatus most frequently from the acquired customer group information;
selection means (7, C7, C8 in FIG. 16) for selecting advertisement information suitable for the detected customer group from a plurality of kinds of advertisement information; and
output means (7, C8 in FIG. 16) for preferentially outputting the selected advertisement information.

2. An apparatus according to claim 1,
characterized in that the advertisement information is image information that is additionally printed on an image print, print of which is designated by the customer and is sold by said customer terminal apparatus.

3. An apparatus according to claim 1,
characterized in that the advertisement information is image information that is preferentially displayed on said customer terminal apparatus.

4. A customer terminal control system including a plurality of customer terminal apparatuses (1) each operated by a customer, and a terminal management apparatus (28) which is connected to said plurality of customer terminal apparatuses via communications,
wherein said terminal management apparatus (28) which is connected to each of said plurality of terminal apparatuses via a communication to receive and acquire (B4 and B5 in FIG. 12A) customer group information of customers who use the terminal apparatus, detects (B8 in FIG. 12A) a group of customers who use the terminal apparatus most frequency from the acquired customer group information, selects (B9 in FIG. 12A) setup information suitable for the detected customer group, and sends (B10 in FIG. 12A) the selected setup information to the terminal apparatus, and
each of said plurality of terminal apparatuses updates an internal setup thereof in accordance with the setup information received from said terminal management apparatus.

5. A system according to claim 4, characterized in that the setup information is advertisement information output by the terminal apparatus which has received the setup information from said terminal management apparatus.

6. A system according to claim 4, characterized in that the setup information is a source image to be composited with an image print that is printed and sold by the terminal apparatus which has received the setup information from said terminal management apparatus.

7. A system according to claim 4, characterized in that the setup information is program information which determines a function of the terminal apparatus which has received the setup information from said terminal management apparatus.

8. A recording medium which records a first program (FIGS. 12A and 12B) used in a terminal management apparatus in a system including a plurality of customer terminal apparatuses each operated by a customer, and a terminal management apparatus which is connected to said plurality of customer terminal apparatuses via communications, and a second program (FIGS. 16 and 17) used in each of said plurality of terminal apparatuses,
said first program including:
an information acquisition sequence (B4, B5) for connecting each terminal apparatus via a communication, and receiving and acquiring customer group information of customers who used the terminal apparatus;
a detection sequence (B8) for detecting a group of customers who use the terminal apparatus most frequently from the acquired customer group information; and
a sending sequence (B10) for selecting setup information that matches the detected customer group, and sending the selected setup information to said terminal apparatus, and
said second program includes a setup updating sequence (D8) for updating the setup of that terminal apparatus in accordance with the setup information received from said terminal management apparatus.

9. A customer terminal control system including a plurality of customer terminal apparatuses (1) each operated by a customer, and a terminal management apparatus (28) which is connected to said plurality of customer terminal apparatuses via communications,
wherein said terminal management apparatus (28) selects (B10) setup information corresponding to a characteristic of the terminal apparatus, to which said terminal management apparatus is connected via a communication, from a plurality of kinds of stored setup information, and sends (B10) the selected setup information to the terminal apparatus, and
each of said plurality of terminal apparatuses updates (D8) an internal setup thereof in accordance with the setup information received from said terminal management apparatus.

10. A system according to claim 9, characterized in that the setup information is program setup information for determining a function of the terminal apparatus.

11. A system according to claim 10, characterized in that each of said terminal apparatuses updates a setup content of a function corresponding to the received program setup information among a plurality of functions.

12. A system according to claim 9, characterized in that the setup information is a source image to be composited with a photo image, which is printed in accordance with customer operation at the terminal apparatus.

13. A system according to claim 9, characterized in that the setup information is addition information to be added to contents already set in the terminal apparatus, or deletion information for deleting the contents already set in the terminal apparatus.

14. A system according to claim 9, characterized in that said terminal management apparatus selects setup information corresponding to a characteristic of a use environment of the terminal apparatus, to which said terminal management apparatus is connected via a communication, from a plurality of kinds of stored setup information, and sends the selected setup information.

15. A system according to claim 9, characterized in that said terminal management apparatus checks setup information which corresponds to setup information to be changed and has already been set in the terminal apparatus, and selects and sends only a portion different from the already set setup information of the setup information to be changed on the basis of the checking result.

16. A recording medium which records a first program (FIG. 24) used in a terminal management apparatus (28) in a system including a plurality of customer terminal apparatuses (1) each operated by a customer, and a terminal management apparatus which is connected to said plurality of customer terminal apparatuses via communications, and a second program (FIGS. 25 to 27) used in each of said plurality of terminal apparatuses,
said first program (FIG. 24) including:
a selection sequence (E1 - E6) for selecting setup information corresponding to a characteristic of the terminal apparatus, to which said terminal management apparatus is connected via a communication, from a plurality of kinds of stored setup information; and
a sending sequence (E8) for sending the selected setup information to the terminal apparatus, and
said second program includes:
a reception sequence (G2) for receiving the setup information from said terminal management apparatus; and
an updating sequence (G5) for updating an internal setup thereof in accordance with the setup information received from said terminal management apparatus.
